# EUROPEAN PATENT SPECIFICATION

(11) **EP 1 123 626 B1**
(45) Date of publication and mention of the grant of the patent: **25.07.2012**
(21) Application number: 99956624.3
(22) Date of filing: 20.10.1999
(51) Int. Cl.: H04L 12/66, H04L 12/64, H04L 29/06, H04M 7/00, H04W 8/10

(54) **IP ROAMING NUMBER GATEWAY**
IP ROAMING-NUMMER GATEWAY
PASSERELLE DE NUMERO ITINERANT DE PROTOCOLE INTERNET

(30) Priority: 21.10.1998 US 176438
(43) Date of publication of application: 16.08.2001
(73) Proprietor: Ericsson Inc., Plano, TX 75024 (US)
(72) Inventor: VALENTINE, Eric, Plano, TX 75057 (US); DAVIDSON, Lee, McKinney, TX 75070 (US)
(74) Representative: Mohsler, Gabriele
(86) International application number: PCT/US1999/024575
(87) International publication number: WO 2000/024212

(56) References cited:
- WO-A-97/13382
- WO-A-99/12329
- KATZ R H: "BEYOND THIRD GENERATION TELECOMMUNICATIONS ARCHITECTURES: THE CONVERGENCE OF INTERNET TECHNOLOGY AND CELLULAR TELEPHONY" MOBILE COMPUTING AND COMMUNICATIONS REVIEW,US,ACM, NEW YORK, NY, vol. 2, no. 2, 1 April 1998 (1998-04-01), pages 1-5, XP000738502

## Description

### BACKGROUND OF THE PRESENT INVENTION

### Field of the Invention

The present invention relates generally to communication systems, and, more particularly, to improved methods and arrangements for interfacing Internet protocol (IP) networks and similar networks to mobile telecommunications networks.

### Background and Objects of the Present Invention

There is currently a movement towards enhancing the capabilities of computer networks, such as the Internet, to support traditional telephony operations. The goal is to provide quality voice communications over the packetized Internet. This capability is often referred to as voice over IP (VoIP). VoIP, over the current Internet, for example, can provide acceptable voice communications at a greatly reduced cost to the user, when compared to traditional telephone tolls.

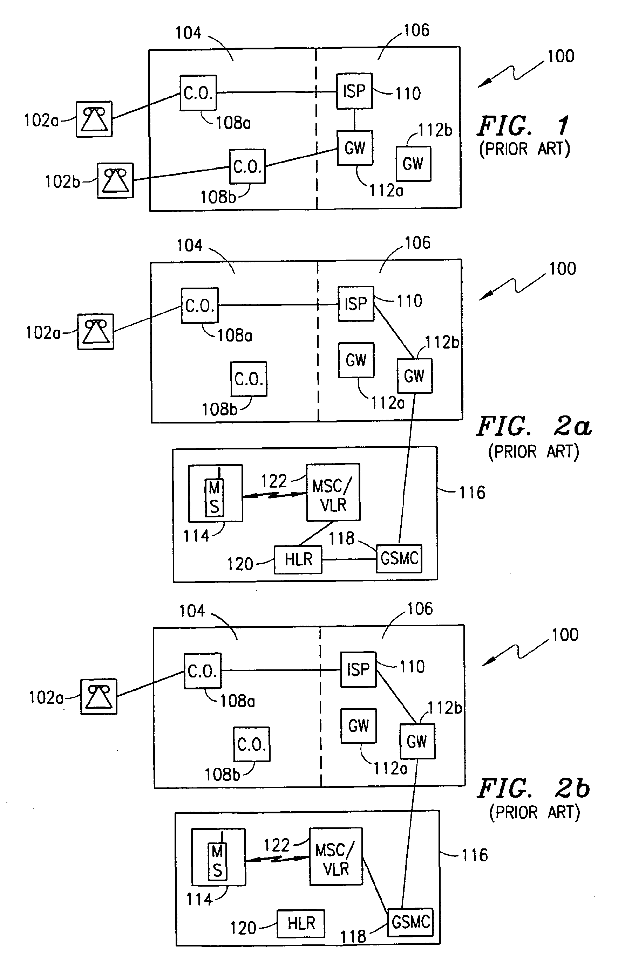

FIGURE 1 is a block diagram depicting an exemplary conventional VoIP call over a communications system 100. Communications system 100 includes terminals 102a and 102b that are used by the calling party and called party, respectively. Terminals 102a-b, can include, for example, a conventional personal computer (PC) that is configured with hardware/software to support VoIP, or simply a telephone (wired or wireless). As shown, terminals 102a-b are each connected to a public switched network 104 and Internet 106, in this exemplary embodiment. When the calling party places a VoIP call to using terminal 102a, a central office 108a, or similar switching center, is used to connect terminal 102a to an Internet Service Provider (ISP) 110, or similar gateway/server. From ISP 110, the call is connected to an appropriate gateway 112a, for example, that is configured to connect the call through another central office 108b, or similar switching center, to terminal 102b. In this manner, the connection through Internet 106 preferably provides a significant long distance connectivity that saves the users money by reducing the associated tolls for the call.

With this simplified example in mind, FIGURES 2a and 2b depict a call to a mobile station 114 within a mobile communications network, such as, for example, a Public Land Mobile Network (PLMN) 116. Mobile station 114 can be a mobile cellular radio telephone, or similar device, for example. As such, in order to successfully route the call from terminal 102a to mobile station 114, there is a need to determine where mobile station 114 is located within the service area of PLMN 116.

Thus, communications system 100 in FIGURES 2a and 2b depict exemplary connectivity/functions required to connect terminal 102a to mobile station 114. Referring to FIGURE 2a, the call from terminal 102a is placed through central office 108a to ISP 110. ISP 110 connects to gateway 112b. Gateway 112b sends a message over signaling system number 7 (e. g., ISUP) lines to a gateway mobile services switching center (GSMC) 118. GSMC 118 forwards a Send Routing Information message, or similar query, for example, to a home location register (HLR) 120. HLR 120 then communicates with one or more combined mobile services switching center/visitor location registers (MSC/VLRs), such as MSC/VLR 122. MSC/VLR 122 is configured, for example, through at least one base station (not shown) to provided wireless communications to mobile station 114. Through these connections/functions, the location ofmobile station 114 is determined, for example, by having mobile station 114 register with the closest base station and MSC/VLR 122. Information about the current location ofmobile station 114 is then passed back to HLR 120 and from there to GSMC 118.

Referring now to FIGURE 2b, GSMC 118 then connects the call through MSC/VLR 122 and eventually to mobile station 114.

Thus, as can be appreciated, as depicted in the simplified exemplary example in FIGURES 2a and 2b, there are significant amounts of signaling, transmission facilities and processing required to support a call from terminal 102a to mobile station 114 through Internet 106. This is because the Internet or other IP network, for example, does not know where mobile station 114 is located and cannot therefore efficiently route the call to the proper MSC/VLR.

Patent application WO-A-97 13382, in an embodiment teaches providing communications to a mobile terminal, wherein a request for a page of data is received at a data service node, the request specifying the mobile voice terminal. A terminal status request is then sent from the data service node to a communications system which serves the particular terminal. The terminal status request specifies the particular telecommunications terminal. A terminal status message containing information indicating a current status of the particular telecommunications terminal is received from the communications system at the data service node that returns a page of data indicating the current status of the particular telecommunications to the data terminal. Upon selection of the icon, a communications request specifying the particular telecommunications terminal is received at the data service node. A communications origination request to originate communications between the particular telecommunications terminal and the other telecommunications terminal is sent from the data service node to the communications system.

As such, additional processing is required to handle the call. Thus, there is a need for improved methods and arrangements that significantly reduce the signaling, transmission facilities and processing burdens placed on the PLMN and IP network resources.

### SUMMARY OF THE INVENTION

The present invention is directed towards improved methods and arrangements that significantly reduce the signaling, transmission facilities and processing burdens placed on mobile communications network and IP network resources by allowing a gateway or similar function within the IP network to directly query subscriber information within the mobile communications network to determine the location of the mobile station being called.

In accordance with certain aspects of the p resent invention, therefore, the location of a mobile station within a mobile communications network can be determined by one or more applications within, or connected to, the IP network.

In accordance with certain further aspects of the present invention, the amounts of signaling, transmission facilities and processing required to support VoIP calls in a mobile communications network are reduced.

In accordance with still other aspects of the present invention, a policing capability is provided for use in an IP network for controlling access to various resources, such as, for example, a location register, within a mobile communications network.

In accordance with still further aspects of the present invention, the improved methods and arrangements allow for a VoIP packetized call to be carried further within the overall communications system. For example, it is possible to carry the packetized call all the way to a transcoder/rate adaption unit within a MSC/VLR, where the speech traffic is then converted directly to its over-the-air format without an intervening decoding, for example, to a G.711 PCM format. Thus, the IP voice traffic is carried as far as possible, while maintaining the integrity ofthe supporting Common Channel Signaling network.

A more complete appreciation of the present invention and the scope thereof can be obtained from the accompanying drawings which are briefly summarized below, the following detailed description ofthe presently-preferred embodiments of the invention, and the appended claims.

### BRIEF DESCRIPTION OF THE DRAWINGS

A more complete understanding of the method and apparatus of the present invention may be obtained by reference to the following Detailed Description when taken in conjunction with the accompanying Drawings wherein:
FIGURE 1 depicts a block diagram of a conventional communications system configured to support voice over Internet protocol (VoIP) calling;
FIGURES 2a and 2b depict block diagrams of a conventional communications system configured to support voice over Internet protocol (VoIP) calling to mobile communications network resources;
FIGURES 3a and 3b depict block diagrams of a n improved communications system having an IP roaming number gateway configured to support voice over Internet protocol (VoIP) calling to mobile communications network resources, in accordance with certain embodiments of the present invention;
FIGURE 4 is a block diagram depicting a location query and policing function (LQPF) arrangement for use in the IP roaming number gateway of FIGURES 3a-b, in accordance with certain preferred embodiments ofthe present invention; and
FIGURE 5 is a flow-chart depicting a portion of a policing process for use in the LQPF of FIGURE 4, in accordance with certain embodiments ofthe present invention.

### DETAILED DESCRIPTION OF THE PRESENTLY PREFERRED EXEMPLARY EMBODIMENTS

The present invention will now be described more fully hereinafter with reference to the accompanying drawings, in which preferred embodiments ofthe invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

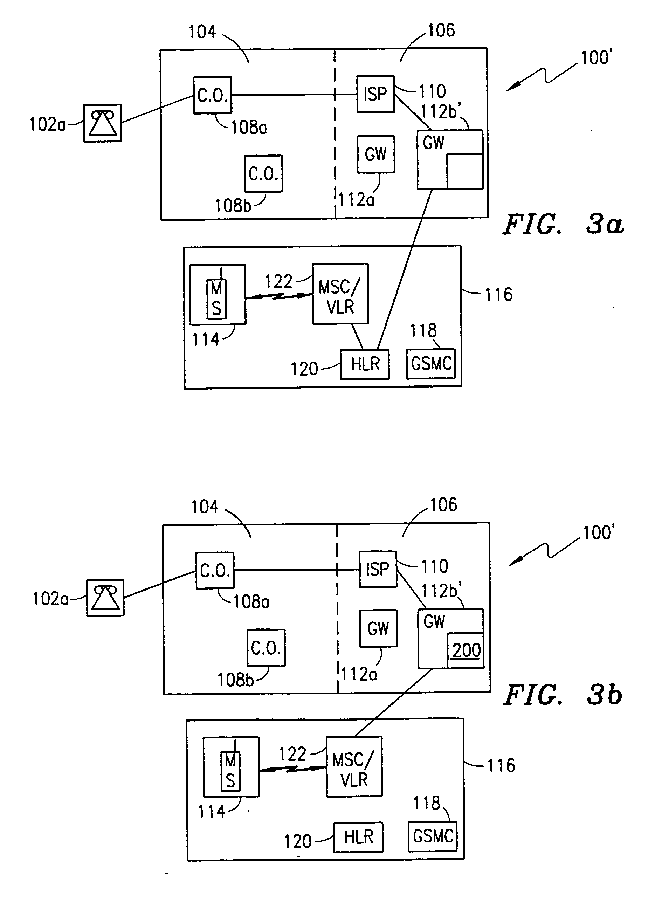

FIGURE 3a, which is similar to FIGURES 1 and 2a-b, depicts an improved communications system 100'. As shown, within Internet 106, or similar network, there is provided an improved gateway 112b' having a roaming number application 200 that is configured to allow for direct querying/access to subscriber information (e. g., location information) associated with mobile station 114. The improved gateway 112b' as such, becomes a IP roaming number gateway that is capable of determining where mobile station 114 is located within PLMN 116, for example. Thus, as depicted, gateway 112b' directly queries HLR 120 for the location of mobile station 114, when a call is placed from terminal 102a. HLR 120 provides the requested subscriber location information to gateway 112b'. Subsequently, as depicted in FIGURE 3b, gateway 112b' then routes the call to MSC/VLR 122. This basic operation, therefore reduces that amount of processing/signaling support required by the various resources in PLMN 116.

In accordance with certain preferred embodiments of the present invention, the packetized call is proved directly to MSC/VLR 122 (e. g., to a transcoder/rate adaption unit therein) where the speech traffic is converted directly to its over-the-air format without an intervening decoding process. For example, the packetized call can be converted to G.711 PCM format. In this manner, the IP voice traffic is carried as far as possible in communications system 100', rather than being converted at an earlier stage/node.

Thus, gateway 112b' is configured to directly route calls to the MSC/VLR 122 in which the mobile station 114 is currently registered, thereby significantly optimizing the route, when compared to using GMSC 118. Gateway 112b' can be a standalone node, or can be an enhanced gateway or gatekeeper (in the case of H.323 networks) element.

Providing querying capabilities to applications within or connected to Internet 106, for example, raises several security concerns. One of these concerns is regulating which ofthe various applications can request/query or otherwise access the subscriber information within mobile communications network 116, and in particular, which of the various applications can access HLR 120 for location information directly. Another related concern is the need to monitor and control unintentional and/or intentional misuse of such a query capability.

Thus, in accordance with certain further embodiments of the present invention, roaming number application 200 not only includes an appropriate request/query interface capability, but also includes a policing function that controls and/or monitors access to the query capabilities.

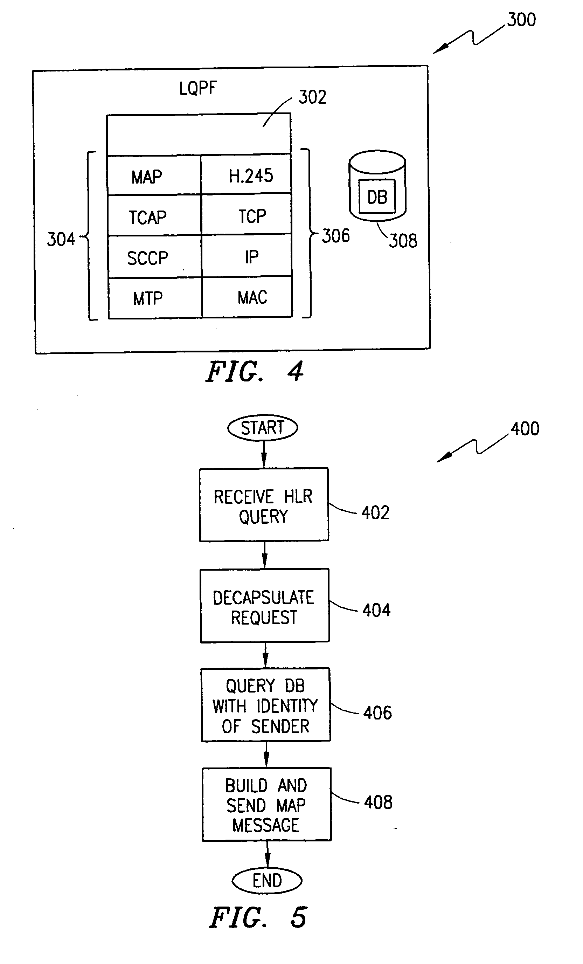

By way of example, FIGURE 4 is a block diagram 300 of a layered model of an exemplary location query and policing function (LQPF) within roaming number application 200, as embodied, for example, in gateway 112b'. As depicted the LQPF includes application layer 302, and protocol stacks 304 and 306. Protocol stack 304 is used to interface with mobile communications network 116, and protocol stack 306 is used to interface with Internet 106 (e.g., using H.323 compliant functions). Protocol stacks 304 and 306 are only examples, thus, other protocol stacks can be employed as required for other types of interfaces/configurations. It is preferred, however, that protocol stack 306 includes a reliable transport mechanism. Thus, for example, TCP as opposed to UDP is shown, because of the inherent danger of retries in the event of lost packets.

Referring to FIGURE 4, LQPF 300 includes a Mobile Application Part (MAP) interface on the mobile communications network "side" (i. e., stack 304) and an IP-query interface H.245, for example, on the Internet "side" (i. e., stack 306). When a request for a roaming number is received on the IP interface side, the request will include a Source Address (e.g., the IP address, or MAC address, ofthe source entity) that identifies the source application/node. This "source identifier" is used in application 302 to verify that the source application/node is allowed to request subscriber information from HLR 120.

Application 302 performs at least two functions in accordance with certain preferred embodiments of the present invention. The first function is an encapsulate/decapsulate function, which essentially converts the Internet request message (e.g., a H.245 message) into a corresponding mobile communications network message (e.g., a MAP message). During this conversion process, the source identifier is extracted.

The second function is a policing function in which the source identifier is examined to determine if the source is a trusted source that can query HLR 120. For example, the source identifier can be compared to an existing trusted database 308 that lists or otherwise defines those applications/nodes that can query HLR 120.

The policing function can also be used to further determine if the request for an HLR query is to be processed. For example, the policing function may determine that the HLR or other network resources are too busy to handle such a query, and/or that the source application/node has exceeded a threshold number of such requests over a defined period of time, or otherwise appears to be abusing the system in someway. The policing function, therefore, prevents unintentional or intentional misuse ofthe HLR query, which could be deleterious to the operation of the mobile communications network 116.

For further description, reference is now made to FIGURE 4, wherein application 302 is configured to provide both decapsulation and encapsulation ofthe HLR query request message received through stack 306. Here, decapsulation essentially involves receiving the H.245 request packet, which includes a MSISDN or, more generally, the called party number for the mobile terminal 114. The packet also contains the identification of the application/node or user making the query request. For example, the packet can include the IP address of terminal 102a or ISP 110, etc. This "source identifier" is then used in the policing function. Here, encapsulation involves building the inputs to the MAP message (for instance Send Routing Information, in a GSM system) for delivery to the lower C7/S7 layers in stack 304. The MAP message is then passed on to HLR 120.

Preferably, encapsulation only takes place after the source identifier has been verified by the policing function, for example, using trusted database 308 or another trusted resource. Thus, encapsulation is only necessary if the policing function within application determines that the query should be allowed to continue.

FIGURE 5 is a flow-chart depicting an exemplary process 400 for use in application 302, in accordance with certain embodiments ofthe present invention. Process 400 includes receiving the request for HLR query in step 402. In step 404, process 400 includes decapsulating the request. A policing function is conducted in step 406, wherein trusted database 308 is accessed to determine if the source identifier is allowed to query HLR 120. Next, in step 408, if the various tests within the policing function are satisfied, then an appropriate MAP message is built and sent to HLR 120. HLR 120 then returns the query with the location ofmobile station 114 and the voice information is passed on through to MSC/VLR 122 and eventually transmitted to mobile station 114, using conventional techniques.

Although preferred embodiments of the system and method ofthe present invention have been illustrated in the accompanying drawings and described in the foregoing detailed description, it will be understood that the invention is not limited to the embodiments disclosed, but is capable of numerous rearrangements, modifications and substitutions without departing from the invention as set forth and defined by the following claims.

## Claims

1. An apparatus for use in a packet switched network (106) of a communications system, the communications system further having a mobile communications network (100') that includes at least one mobile station (114) and a resource locator (120) determining a route for incoming calls to the mobile station,
the apparatus comprising at least:
one application (200) that is configured to communicate to the resource locator (120) within the mobile communications network 116) and thereby request information from the resource locator about the route for incoming calls to the mobile station.

2. The apparatus as recited in claim 1, being configured such that a request from the application (200) causes the resource locator (120) to determine the route for incoming calls to the mobile station (114).

3. The apparatus as recited in claim 2, being configured such that the request from the application (200) causes the resource locator (120) to access a home location register - HLR (120), within the mobile communications network (116), that identifies a switching center (122), also within the mobile communications network, to which the mobile station (114) is registered, and the information about the route further includes information about the switching center.

4. The apparatus as recited in claim 3, being realized as a gateway (112b) within the packet switched network (106) to route the calls to the switching center (122).

5. The apparatus as recited in claim 4, wherein the application (200) further comprises a policing function (300) being configured to determine, if a request for the route information is sent from the gateway (112b) to the resource locator (120).

6. The apparatus as recited in claim 5, wherein the policing function (300) is further configured to verify if a source, as identified by the application, is allowed to query the resource locator (120) for the route information.

7. The apparatus as recited in claim 6, wherein the apparatus further comprises at least one trusted database (308) that is configured to be accessed by the policing function (300) in the application (200) to determine if the source is allowed to query the resource locator (120) for the route information.

8. The apparatus as recited in claim 4, wherein the application (200) is further configured to receive a request message through the packet switched network (106) and output a query message to the HLR (120).

9. The apparatus as recited in claim 8, wherein the request message is a H.245 formatted message received through a TCP/IP protocol stack.

10. The apparatus as recited in claim 8, wherein the query message is a MAP formatted message.

11. An arrangement for use in a communications system (100') having at least one packet switched network (106) and at least one mobile communications network (116), the arrangement comprising:
at least one mobile station (114) within the mobile communications network (100');
a resource locator (120), within the mobile communications network, the resource locator being configured to determine a route for incoming calls to the mobile station (114); and
an apparatus of any one of the preceding claims..

12. A method for routing a call from a packet switched network (106) to a mobile communications network (116), the method comprising:
identifying within the packet switched network that a called party is a mobile subscriber (114) within the mobile communications network;
from within the packet switched network, directly accessing routing information about the called party from within at least one location register (120) within the mobile communications network; and
routing a call to the mobile subscriber through at least one switching center (122) within the mobile communications network as identified in the routing information.

13. The method as recited in claim 12, wherein the step of directly accessing the routing information further comprises verifying that a requesting source be allowed to access the routing information.

14. The method as recited in claim 13, wherein the step of routing the call to the mobile subscriber (114) through the switching center (122) is only conducted if the step of verifying that the requesting source is allowed to access the routing information has been satisfied.

15. The method as recited in claim 14, wherein the routing information includes information about the location of the mobile subscriber (114) within the mobile communications network (116).

16. The method as recited in claim 14, wherein the step of identifying that the called party is a mobile subscriber (114) within the mobile communications network (116) further comprises decapsulating a request message (404).

17. The method as recited in claim 16, wherein the step of directly accessing routing information about the called party further comprises encapsulating at least a portion of the request message, as decapsulated.

18. The method as recited in claim 17, wherein the step of routing the call to the mobile subscriber (114) through the switching center (122) further comprises building at least one MAP message.

## Patentansprüche

1. Vorrichtung zur Verwendung in einem paketvermittelten Netzwerk (106) eines Kommunikationssystems, wobei das Kommunikationssystem ferner ein Mobilkommunikationsnetz (100') aufweist, das mindestens eine Mobilstation (114) und einen Resource Locator (120) umfasst, der einen Leitweg für eingehende Rufe zur Mobilstation bestimmt,
wobei die Vorrichtung mindestens umfasst:
eine Anwendung (200), die so konfiguriert ist, dass sie mit dem Resource Locator (120) innerhalb des Mobilkommunikationsnetzes (116) kommuniziert und dadurch Informationen vom Resource Locator über den Leitweg für eingehende Rufe zur Mobilstation anfordert.

2. Vorrichtung nach Anspruch 1, die derart konfiguriert ist, dass eine Anforderung von der Anwendung (200) den Resource Locator (120) veranlasst, den Leitweg für eingehende Rufe zur Mobilstation (114) zu bestimmen.

3. Vorrichtung nach Anspruch 2, die derart konfiguriert ist, dass die Anforderung von der Anwendung (200) den Resource Locator (120) veranlasst, auf ein Heimatregister HLR (120) innerhalb des Mobilkommunikationsnetzes (116) zuzugreifen, das eine Vermittlungsstelle (122) ebenfalls innerhalb des Mobilkommunikationsnetzes identifiziert, bei welcher die Mobilstation (114) registriert ist, und die Informationen über den Leitweg ferner Informationen über die Vermittlungsstelle umfassen.

4. Vorrichtung nach Anspruch 3, die als ein Gateway (112b) innerhalb des paketvermittelten Netzwerks (106) realisiert ist, um die Rufe zur Vermittlungsstelle (122) zu leiten.

5. Vorrichtung nach Anspruch 4, wobei die Anwendung (200) ferner eine Überwachungsfunktion (300) umfasst, die so konfiguriert ist, dass sie bestimmt, ob eine Anforderung für die Leitweginformationen vom Gateway (112b) an den Resource Locator (120) gesendet wird.

6. Vorrichtung nach Anspruch 5, wobei die Überwachungsfunktion (300) ferner so konfiguriert ist, dass sie überprüft, ob eine Quelle, wie durch die Anwendung identifiziert, den Resource Locator (120) für die Leitweginformationen abfragen darf.

7. Vorrichtung nach Anspruch 6, wobei die Vorrichtung ferner mindestens eine vertrauenswürdige Datenbank (308) umfasst, die so konfiguriert ist, dass die Überwachungsfunktion (300) in der Anwendung (200) darauf zugreift, um zu bestimmen, ob die Quelle den Resource Locator (120) für die Leitweginformationen abfragen darf.

8. Vorrichtung nach Anspruch 4, wobei die Anwendung (200) ferner so konfiguriert ist, dass sie eine Anforderungsnachricht durch das paketvermittelte Netzwerk (106) empfängt und eine Abfragenachricht an das HLR (120) ausgibt.

9. Vorrichtung nach Anspruch 8, wobei die Anforderungsnachricht eine H.245-formatierte Nachricht ist, die durch einen TCP/IP-Protokollstapel empfangen wird.

10. Vorrichtung nach Anspruch 8, wobei die Abfragenachricht eine MAP-formatierte Nachricht ist.

11. Anordnung zur Verwendung in einem Kommunikationssystem (100') mit mindestens einem paketvermittelten Netzwerk (106) und mindestens einem Mobilkommunikationsnetz (116), wobei die Anordnung umfasst:
mindestens eine Mobilstation (114) innerhalb des Mobilkommunikationsnetzes (100');
einen Resource Locator (120) innerhalb des Mobilkommunikationsnetzes (100'), wobei der Resource Locator so konfiguriert ist, dass er einen Leitweg für eingehende Rufe zur Mobilstation (114) bestimmt; und
eine Vorrichtung nach einem der vorhergehenden Ansprüche.

12. Verfahren zum Leiten eines Rufs von einem paketvermittelten Netzwerk (106) zu einem Mobilkommunikationsnetz (116), wobei das Verfahren umfasst:
Identifizieren innerhalb des paketvermittelten Netzwerks, dass ein gerufener Teilnehmer ein Mobilteilnehmer (114) innerhalb des Mobilkommunikationsnetzes ist;
direktes Zugreifen von innerhalb des paketvermittelten Netzwerks auf Leitweginformationen über den gerufenen Teilnehmer aus innerhalb mindestens eines Lokalisierungsregisters (120) innerhalb des Mobilkommunikationsnetzes; und
Leiten eines Rufes zum Mobilteilnehmer durch mindestens eine Vermittlungsstelle (122) innerhalb des Mobilkommunikationsnetzes, wie in den Leitweginformationen identifiziert.

13. Verfahren nach Anspruch 12, wobei der Schritt des direkten Zugreifens auf die Leitweginformationen ferner ein Vergewissern umfasst, dass eine anfordernde Quelle auf die Leitweginformationen zugreifen darf.

14. Verfahren nach Anspruch 13, wobei der Schritt des Leitens des Rufes zum Mobilteilnehmer (114) durch die Vermittlungsstelle (122) nur durchgeführt wird, wenn der Schritt des Vergewisserns, dass die anfordernde Quelle auf die Leitweginformationen zugreifen darf, zufriedenstellend war.

15. Verfahren nach Anspruch 14, wobei die Leitweginformationen Informationen über den Aufenthaltsort des Mobilteilnehmers (114) innerhalb des Mobilkommunikationsnetzes (116) umfassen.

16. Verfahren nach Anspruch 14, wobei der Schritt des Identifizierens, dass der gerufene Teilnehmer ein Mobilteilnehmer (114) innerhalb des Mobilkommunikationsnetzes (116) ist, ferner ein Entkapseln einer Anforderungsnachricht (404) umfasst.

17. Verfahren nach Anspruch 16, wobei der Schritt des direkten Zugreifens auf Leitweginformationen über den gerufenen Teilnehmer ferner ein Verkapseln mindestens eines Abschnitts der Anforderungsnachricht, wie entkapselt, umfasst.

18. Verfahren nach Anspruch 12, wobei der Schritt des Leitens des Rufes zum Mobilteilnehmer (114) durch die Vermittlungsstelle (122) ferner ein Erstellen mindestens einer MAP-Nachricht umfasst.

## Revendications

1. Dispositif à utiliser dans un réseau à commutation de paquets (106) d'un système de communication, le système de communications comportant en outre un réseau de communication mobile (100') qui inclut au moins une station mobile (114) et un localisateur de ressources (120) déterminant une route pour les appels entrants vers la station mobile,
le dispositif comprenant au moins :
une application (200) qui est configurée pour communiquer avec le localisateur de ressources (120) à l'intérieur du réseau de communications mobile (116) et demander ainsi une information au localisateur de ressources au sujet de la route pour les appels entrants vers la station mobile.

2. Dispositif selon la revendication 1, étant configuré de telle sorte qu'une demande provenant de l'application (200) amène le localisateur de ressources (120) à déterminer la route pour les appels entrants vers la station mobile (114).

3. Dispositif selon la revendication 2, étant configuré de telle sorte que la demande provenant de l'application (200) amène le localisateur de ressources (120) à accéder à un registre de localisation et de rattachement - HLR (120), à l'intérieur du réseau de communication mobile (116), qui identifie un centre de commutation (122), également à l'intérieur du réseau de communication mobile, chez lequel la station mobile (114) est enregistrée, et l'information relative à la route inclut en outre une information relative au centre de commutation.

4. Dispositif selon la revendication 3, état réalisé comme une passerelle (112b) à l'intérieur du réseau à commutation de paquets (106) pour router les appels vers le centre de commutation (122).

5. Dispositif selon la revendication 4, dans lequel l'application (200) comprend en outre une fonction de régulation (300) étant configurée pour déterminer, si une demande d'information de route est envoyée de la passerelle (112b) au localisateur de ressources (120).

6. Dispositif selon la revendication 5, dans lequel la fonction de régulation (300) est en outre configurée afin de vérifier si une source, telle qu'identifiée par l'application, est autorisée à interroger le localisateur de ressources (120) afin d'obtenir l'information de route.

7. Dispositif selon la revendication 6, dans lequel le dispositif comprend en outre au moins une base de données de confiance (308) qui est configurée pour être accédée par la fonction de régulation (300) dans l'application (200) afin de déterminer si la source est autorisée à interroger le localisateur de ressource (120) afin d'obtenir l'information de route.

8. Dispositif selon la revendication 4, dans lequel l'application (200) est en outre configurée afin de recevoir un message de demande à travers le réseau à commutation de paquets (106) et délivrer un message d'interrogation vers le HLR (120).

9. Dispositif selon la revendication 8, dans lequel le message de demande est un message au format H.245 reçu par l'intermédiaire d'une pile de protocole TCP/IP.

10. Dispositif selon la revendication 8, dans lequel le message d'interrogation est un message au format MAP.

11. Agencement à utiliser dans un système de communications (100') comportant au moins un réseau à commutation de paquets (106) et au moins un réseau de communications mobile (116), l'agencement comprenant :
au moins une station mobile (114) à l'intérieur du réseau de communications mobile (100') ;
un localisateur de ressources (120) à l'intérieur du réseau de communications mobile (100'), le localisateur de ressources état configuré afin de déterminer une route pour les appels entrants vers la station mobile (114) ; et
un dispositif selon une quelconque des revendications précédentes.

12. Procédé de routage d'un appel d'un réseau à commutation de paquets (106) vers un réseau de communications mobile (116), le procédé comprenant de :
identifier à l'intérieur du réseau à commutation de paquets qu'une partie appelée est un abonné mobile (114) à l'intérieur du réseau de communications mobile ;
depuis l'intérieur du réseau à commutation de paquets, accéder directement à l'information de routage relative à la partie appelée provenant d'au moins un registre de localisation (120) à l'intérieur du réseau de communication mobile ; et
router un appel vers l'abonné mobile par l'intermédiaire d'au moins un centre de commutation (122) à l'intérieur du réseau de communication mobile tel qu'identifié dans l'information de routage.

13. Procédé selon la revendication 12, dans lequel l'étape d'accès direct à l'information de routage comprend en outre de vérifier qu'une source demandeuse est autorisée à accéder à l'information de routage.

14. Procédé selon la revendication 13, dans lequel l'étape de routage de l'appel vers l'abonné mobile (114) par l'intermédiaire du centre de commutation (122) est seulement effectuée si l'étape de vérification que la source demandeuse est autorisée à accéder à l'information de routage a été satisfaite.

15. Procédé selon la revendication 14, dans lequel l'information de routage inclut une information relative à la localisation de l'abonné mobile (114) à l'intérieur du réseau de communication mobile (116).

16. Procédé selon la revendication 14, dans lequel l'étape d'identification que la partie appelée est un abonné mobile (114) à l'intérieur du réseau de communication mobile (116) comprend en outre de décapsuler un message de demande (404).

17. Procédé selon la revendication 16, dans lequel l'étape d'accès direct à l'information de routage relative à la partie appelée comprend en outre d'encapsuler au moins une portion du message de demande, lorsqu'il est décapsulé.

18. Procédé selon la revendication 17, dans lequel l'étape de routage de l'appel vers l'abonné mobile (114) par l'intermédiaire du centre de commutation (122) comprend en outre de construire au moins un message MAP.
